# EUROPÄISCHE PATENTSCHRIFT

(11) **EP 2 455 385 B1**
(45) Veröffentlichungstag und Bekanntmachung des Hinweises auf die Patenterteilung: **22.10.2014**
(21) Anmeldenummer: 11188818.6
(22) Anmeldetag: 11.11.2011
(51) Int. Cl.: C07F 7/18

(54) **Verfahren zur Herstellung von Carbamatoorganosilanen**
Process for preparing carbamatoorganosilanes
Procédé de fabrication de carbamato-organosilanes

(30) Priorität: 23.11.2010 DE 102010061816
(43) Veröffentlichungstag der Anmeldung: 23.05.2012
(73) Patentinhaber: Wacker Chemie AG, 81737 München (DE)
(72) Erfinder: Stanjek, Volker, 84539 Ampfing (DE); Stepp, Michael, 5122 Überackern (AT)
(74) Vertreter: Fritz, Helmut

(56) Entgegenhaltungen:
- WO-A1-2006/012957
- DE-A1- 10 240 388

## Beschreibung

Die Erfindung betrifft ein Verfahren zur Herstellung von Carbamatoorganosilanen aus entsprechenden Chlororganosilanen, Metallcyanaten und Alkoholen.

Aus dem Stand der Technik sind verschiedene Verfahren zur Herstellung von 3-Carbamatopropylsilanen der Formel (1) bekannt.

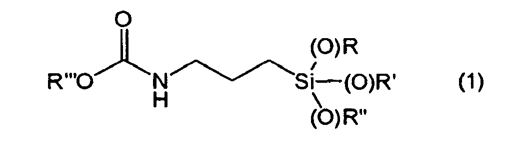

Gängige Herstellverfahren gehen meist von 3-Aminopropylsilanen der Formel (2) aus. Diese können entweder mit Dialkylcarbonaten oder aber einer Mischung aus Harnstoff und Alkohol zu den entsprechenden Carbamatosilanen umgesetzt werden. Die erstgenannte Verfahrensvariante ist dabei beispielsweise in WO 2007/037817 und die zweitgenannte in EP 1010704 beschrieben.

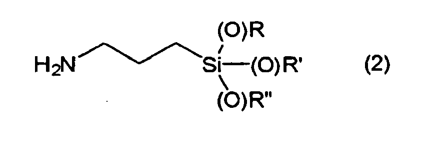

Nachteilig an diesem Verfahren ist die Tatsache, dass von Aminosilanen ausgegangen werden muss, die meist deutlich teurer sind als die korrespondierenden 3-Chlorpropylsilane der Formel (3).

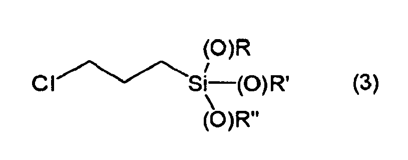

Zudem sind nur Aminoorganosilane mit einem Propylspacer zwischen der Amino- und der Silylgruppe kommerziell verfügbar, wohingegen die entsprechenden α-Aminomethylsilane der Formel (5) nur schwer zugänglich und zudem nur mäßig stabil sind. Dementsprechend sind die o.g. Verfahren nicht zur Herstellung der für viele (Folge-)Produkte interessanten α -Carbamatomethylsilane der Formel (4) geeignet. Die korrespondierenden α-Chlormethylsilane der Formel (6) hingegen sind beispielsweise über die in EP 1310501 beschriebene Photochlorierung von Methylchlorsilanen und einer anschließenden Alkoxylierung, d.h. dem Austausch aller siliciumgebundenen Chloratome gegen Alkoxygruppen, problemlos darstellbar.

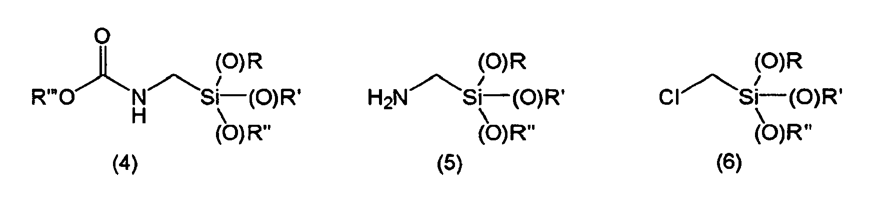

Somit wäre ein Verfahren wünschenswert, mit dem ein weites Spektrum verschiedener Carbamatoorganosilane ausgehend von den entsprechenden Chlororganosilanen zugänglich ist.

Entsprechende Verfahren sind ebenfalls bereits beschrieben, beispielsweise in US 3494951. Hier wird eine Mischung aus 3-Chlorpropylsilanen der Formel (3) mit Kaliumcyanat und einem Alkohol in einem Lösungsmittel unter Rückfluss erhitzt. Als Lösungsmittel dient dabei vorzugsweise Dimethylformamid. Es bilden sich 3-Carbamatopropylsilane der Formel (1) und Kaliumchlorid als Coprodukt. Letzteres wird abfiltriert und das Lösungsmittel wird destillativ entfernt.

Es wurde jedoch gefunden, dass dieses Verfahren entsprechend des Standes der Technik zahlreiche deutliche Mängel aufweist. So werden zum einen ob der vergleichsweise langen Reaktionszeiten sowie der Notwendigkeit, große Lösungsmittelmengen einzusetzen, nur sehr schlechte Raum-Zeit-Ausbeuten erzielt. Des Weiteren zeigte sich, dass die Abfiltrierung des als Coprodukt entstehenden Salzes außerordentlich problematisch ist, da das Salz so feinkristallin anfällt, dass die Reaktionsmischung nur sehr schlecht filtrierbar ist. Schließlich wurde auch noch gefunden, dass auch die filtrierte Rohproduktlösung noch signifikante gelöste Salzmengen enthält. Diese fallen dann in der Kälte (z.B. wenn das Rohprodukt im Winter in nicht geheizten Räumen gelagert wird) und/oder beim Entfernen des Lösungsmittels aus und stören die weiteren Prozessschritte, z.B. eine destillative Reinigung Rohproduktes mittels eines Dünnschichtverdampfers.

Ein weiteres Verfahren zur Herstellung von Carbamatoorganosilanen der Formeln (1) oder (4) aus den entsprechenden Chlororganosilanen (3) bzw. (6) ist in DE 10240388 beschrieben. Hier wird eine Suspension aus dem Metallcyanat in einem Lösungsmittel vorgelegt und eine Mischung aus Methanol und Chlororganosilan zugetropft. Als Lösungsmittel dient dabei vorzugsweise Dimethylsulfoxid oder Dimethylformamid. Auch hier bilden sich die jeweiligen Carbamatopropylsilane und Kaliumchlorid als Coprodukt. Letzteres wird wiederum abfiltriert und das Lösungsmittel wird destillativ entfernt.

Doch auch bei dieser Verfahrensvariante konnten verschiedene Nachteile festgestellt werden. So werden zum einen relativ große Mengen an polymeren und oligomeren Nebenprodukten gebildet. Diese Nebenproduktbildung steht zwar im Widerspruch zu den Angaben in DE 10240388, welches quantitative Ausbeuten bei Produktreinheiten von ca. 95% beschreibt. Allerdings sind diese höhermolekularen Verunreinigungen durch die in DE 10240388 beschriebenen gaschromatographische Untersuchungen des Reaktionsgemisches nicht detektierbar, weshalb gaschromatographische Spektren entsprechend hohe Reinheiten auch dann angeben, wenn die Produktlösung 10-20% Oligomere oder Polymere enthält.

Zum anderen sind auch bei dem in DE 10240388 beschriebenen Verfahren die Probleme einer mangelnden Filtrierbarkeit der Reaktionsmischung sowie der im Filtrat gelöst verbleibenden Salzfracht ungelöst.

Aufgabe war daher die Entwicklung eines Verfahrens zur Herstellung von Carbamatoorganosilanen ausgehend von Chlororganosilanen, das die Nachteile des Standes der Technik nicht mehr aufweist.

Gegenstand der Erfindung ist ein Verfahren zur Herstellung von Carbamatoorganosilanen (S) der allgemeinen Formel (7),

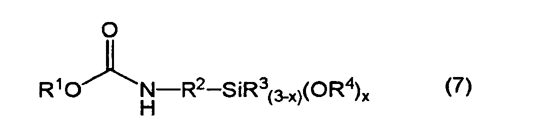

Bei dem ein Halogenorganosilan (S1) der allgemeinen Formel (8),

X―R²―SiR³₍₃₋ₓ₎(OR⁴)ₓ (8)

mit einem Metallcyanat (MOCN) und einem Alkohol (A) der allgemeinen Formel (9),

R¹OH (9)

in Gegenwart mindestens eines aprotischen Lösungsmittel (L) umgesetzt wird, wobei
- **R¹, R³** und **R⁴**: jeweils einen unsubstituierten oder halogensubstituierten Kohlenwasserstoffrest mit 1-10 C-Atomen,
- **R²**: einen zweiwertigen unsubstituierten oder halogensubstituierten Kohlenwasserstoffrest mit 1-10 C-Atomen, der durch nicht benachbarte Sauerstoffatome unterbrochen sein kann,
- **X**: ein Halogenatom, und
- x: einen Wert 0, 1, 2 oder 3 bedeuten,
wobei vor der Feststoffabtrennung der als Nebenprodukte entstandenen Metallhalogenide sowie der gegebenenfalls noch vorhanden Metallcyanatreste mindestens 50% des Lösungsmittels (L) destillativ entfernt werden.

Die Feststoffe lassen sich leicht nach abgeschlossener Reaktion abtrennen.

Vorzugsweise werden vor der Abtrennung, insbesondere Filtrierung der als Nebenprodukte entstandenen Metallhalogenide sowie der gegebenenfalls noch vorhanden Metallcyanatreste mindestens 70% und besonders bevorzugt mindestens 85% des Lösungsmittels (L) destillativ entfernt.

Bei einer besonders bevorzugten Variante des erfindungsgemäßen Verfahrens wird der Reaktionsmischung vor der Feststoffabtrennung, die insbesondere durch Abfiltrieren der Metallsalze erfolgt, mindestens ein Lösungsmittel (L1) zugegeben, welches ein geringeres Dipolmoment aufweist als das Lösungsmittel (L). Sofern das Lösungsmittel (L1) einen höheren Siedepunkt aufweist als das Lösungsmittel (L) kann die Zugabe des Lösungsmittels (L1) vor oder nach der erfindungsgemäßen destillativen Entfernung des Lösungsmittels (L) erfolgen. Vorzugsweise wird das mindestens eine Lösungsmittel (L1) jedoch unabhängig von den jeweiligen Siedepunkten der Lösungsmittel (L) und (L1) erst nach der destillativen Entfernung des Lösungsmittels (L) zugegeben.

Vorzugsweise werden der Reaktionsmischung nach dem erfindungsgemäßen destillativen Entfernen des Lösungsmittels (L) mindestens 0,3, insbesondere mindestens 0,5 Gewichtsteile und höchstens 3, insbesondere höchstens 1,5 Gewichtsteile eines oder mehrerer Lösungsmittel (L1) pro zuvor entferntem Gewichtsteil Lösungsmittel (L) zugesetzt.

Nach der Filtration wird der Filterkuchen vorzugsweise mit demselben Lösungsmittel (L1) gewaschen, welches der Reaktionsmischung nach der Entfernung des Lösungsmittels (L) zugegeben worden ist. Bevorzugt werden die Filtrate anschließend vereinigt und das Lösungsmittel (L1) wird destillativ entfernt.

Bei der Durchführung der erfindungsgemäßen Reaktion können die verschiedenen Edukte, Reaktanden, Lösungsmittel sowie gegebenenfalls auch noch weitere Stoffe zur Reaktionsbeschleunigung bereits zu Reaktionsbeginn vorgelegt werden oder aber erst während der Reaktion dosiert werden.

Die Reaktionstemperatur liegt vorzugsweise bei mindestens 110 °C, wobei Temperaturen von mindestens 120 °C und insbesondere von mindestens 125 °C besonders bevorzugt werden. Vorzugsweise beträgt die Reaktionstemperatur höchstens 200 °C, insbesondere höchstens 160 °C.

Die Reste **R¹**, **R³** und **R⁴** können gleich oder verschieden sein. Vorzugsweise sind die Reste **R¹** und **R⁴** identisch, weil es ansonsten zu einem Austausch der Reste **R⁴** am Siliciumatom kommen kann. Damit würde eine Mischung verschiedener Silane (S) der allgemeinen Formel (7) erhalten werden, in der die einzelnen Silanmoleküle unterschiedliche Reste **R¹** und **R⁴** aufweisen, was zwar möglich, meist aber nicht erwünscht ist.

Die Halogensubstituenten an den Resten **R¹, R², R³** und **R⁴** werden vorzugsweise ausgewählt aus Fluor und Chlor.

Bei den Silanen (S) bzw. (S1) der allgemeinen Formeln (7) bzw. (8) steht R³ vorzugsweise für einen Methyl-, Ethyl-, iso- oder n-Propyl-Rest, wobei ein Methylrest besonders bevorzugt wird. **R⁴** steht vorzugsweise für einen Methyl-, Ethyl-, iso- oder n-Propyl-Rest, wobei ein Methyl- oder Ethylrest besonders bevorzugt wird. **R²** steht vorzugsweise für einen Propylen oder besonders bevorzugt für einen Methylenrest.

Bei den Silanen (S) der allgemeinen Formel (7) bzw. dem Alkohol (A) der allgemeinen Formel (9) steht **R¹** vorzugsweise für einen Methyl-, Ethyl-, iso- oder n-Propyl-Rest, wobei ein Methyl- oder Ethylrest besonders bevorzugt wird.

Bei den Silanen (S1) der allgemeinen Formel (8) steht **X** vorzugsweise für ein Chloratom.

Das Silan (S1) kann sich prinzipiell zu Reaktionsbeginn bereits vollständig in der Reaktionsmischung befinden. Bei einer bevorzugten Variante des erfindungsgemäßen Verfahrens wird das Chlororganosilan (S1) jedoch ganz oder zumindest teilweise, insbesondere mindestens zu 80 Gew.-% erst während der Reaktion dosiert.

Der Vorteil einer Dosierung des Chlororganosilans (S1) liegt in der Verbesserung der Reaktionssicherheit, da die deutlich exotherme Reaktion dann durch eine Regulierung der Dosierung des Silans (S1) kontrolliert und notfalls auch gestoppt werden kann. Dabei ist eine Dosierung des flüssigen Silans (S1) meist wesentlich komfortabler als die prinzipiell ebenfalls denkbare Dosierung des festen Metallcyanates (MOCN). Eine Regulierung der Exothermie ausschließlich über die Dosierung des Alkohols (A) ist dahingegen nicht möglich, da Cyanat (MOCN) und Chlororganosilan (S1) auch in Abwesenheit des Alkohols (A) unter Ausbildung des entsprechenden Isocyanurates eine deutlich exotherme Reaktion eingehen können (siehe US 3494951).

Als Metallcyanate können prinzipiell die Cyanate sämtlicher ein- oder zweiwertiger Metallionen eingesetzt werden, wobei die Erdalkalicyanate und insbesondere die Alkalicyanate bevorzugt werden. Besonders bevorzugt wird Natrium- und insbesondere Kaliumcyanat verwendet.

Es werden vorzugsweise mindestens 0,8 Mol, besonders bevorzugt mindestens 0,9 Mol, insbesondere mindestens 1 Mol Cyanationen, und vorzugsweise höchstens 2 Mol, besonders bevorzugt höchstens 1,5 Mol und insbesondere höchstens 1,2 Mol Cyanationen pro Mol Silan (S1) der allgemeinen Formel (8) eingesetzt.

Das feste Metallcyanat (MOCN) wird vorzugsweise nicht dosiert sondern bereits vor Reaktionsbeginn vorgelegt.

Als Alkohole (A) werden bevorzugt Methanol, Ethanol, iso- oder n-Propanol eingesetzt, wobei Methanol und Ethanol besonders bevorzugt sind.

Es werden vorzugsweise mindestens 0,8 Mol, besonders bevorzugt mindestens 0,9 Mol, insbesondere mindestens 1 Mol Alkohol (A), und vorzugsweise höchstens 2 Mol, besonders bevorzugt höchstens 1,5 Mol und insbesondere höchstens 1,2 Mol Alkohol (A) pro Mol Silan (S1) der allgemeinen Formel (8) eingesetzt.

Das Lösungsmittel (L) weist vorzugsweise einen Siedepunkt von mindestens 135 °C, besonders bevorzugt von mindestens 145 °C, und vorzugsweise höchstens 240 °C, besonders bevorzugt höchstens 220 °C, jeweils bei 0,1 MPa auf.

Als Lösungsmittel (L) können beispielsweise Dimethylformamid, Dimethylsulfoxid, N-Methylpryrrolidon, N-Methylimidazol, Sulfolan, Diethylformamid, Diemethylacetamid, Diethylacetamid, Acetylaceton, Acetessigester, Hexamethylphosphorsäuretriamid Nitrile wie Acetonitril oder Butyronitril, sowie Ether und/oder sowie Ester mit mindestens zwei Ether- oder Estergruppen pro Molekül eingesetzt werden. Bevorzugte Lösungsmittel (L) sind Dimethylformamid, Dimethylsulfoxid, N-Methylpryrrolidon, Sulfolan und Diethylformamid, wobei Dimethylformamid besonders bevorzugt wird.

Vorzugsweise wird das Lösungsmittel in Mengen eingesetzt dass mindestens 0,1 und maximal 1,5 Gewichtsteile Lösungsmittel (L) pro Gewichtsteil an gesamter Eduktmenge eingesetzt werden. Die gesamte Eduktmenge setzt sich dabei aus der Menge an Silan (S1), Metallcyanat (MOCN) und Alkohol (A) zusammen. Bevorzugt wird das Lösungsmittel in Mengen eingesetzt dass maximal 1 Gewichtsteil, besonders bevorzugt 0,7 Gewichtsteile Lösungsmittel (L) pro Gewichtsteil an gesamter Eduktmenge eingesetzt werden.

Das Lösungsmittel wird vorzugsweise nicht dosiert sondern bereits vor Reaktionsbeginn vorgelegt.

Gegebenenfalls können während der Reaktion noch weitere Stoffe zur Reaktionsbeschleunigung verwendet werden. Ein bevorzugtes Beispiel stellt der Zusatz eines Metalljodides, vorzugsweise eines Alkalimetalljodides und besonders bevorzugt von Kaliumjodid dar. Ebenso können auch Phasentransferkatalysatoren, wie sie z.B. in DE10240388 beschrieben werden, zugesetzt werden.

Es werden vorzugsweise mindestens 0,01 Gewichtsteile, besonders bevorzugt mindestens 0,1 Gewichtsteile, insbesondere mindestens 0,5 Gewichtsteile Metalljodid, und vorzugsweise höchstens 5 Gewichtsteile, besonders bevorzugt höchstens 3 Gewichtsteile und insbesondere höchstens 2 Gewichtsteile Metalljodid auf 100 Gewichtsteile Metallcyanat eingesetzt.

Die weiteren Stoffe zur Reaktionsbeschleunigung werden vorzugsweise nicht dosiert sondern bereits vor Reaktionsbeginn vorgelegt.

Bei dem Lösungsmittel (L1) handelt es sich vorzugsweise um aromatische und/oder aliphatische Kohlenwasserstoffe (z.B. die verschiedenen Stereoisomeren des Pentans, Hexans, Heptans, Octans etc., Cyclopentan, Cyclohexan, Methylcyclohexan, Cycloheptan etc. Benzol, Toluol, die verschiedenen Xyloltyen etc.), substituierte Aromaten (z.B. Chlorbenzol), heterocyclische Aromaten (z.B. Pyridin, Furan etc.), Ether (z.B. Diethylether, Metyl-t-butylether, Tetrahydrofuran, Dibutylether, Anisol etc.), Ester (z.B. Ethylacetat, Methylacetat, Butylacetat, Alkylbenzoate, Dialkylmaleinate, Dialkylphtalate etc.), Ketone (z.B. Aceton, Butanon, etc.) oder Alkohole (z.B. t-Butanol). Besonders bevorzugt sind aromatische und/oder aliphatische Kohlenwasserstoffe, wie beispielsweise die verschiedenen cyclischen oder nicht-cyclischen Pentan-, Hexan-, Heptan- oder Octanisomere sowie Toluol oder Xylol.

Der Erfindung liegt die überraschende Entdeckung zugrunde, dass sich die Filtrierbarkeit der Suspension durch die erfindungsgemäße Entfernung des Lösungsmittels (L) und insbesondere durch den bevorzugten vollständigen oder zumindest teilweisen Austausches des Lösungsmittels (L) gegen ein Lösungsmittel (L1) mit einem geringeren Dipolmoment deutlich verbessern lässt.

Zudem wird durch die erfindungsgemäße Entfernung des Lösungsmittels (L) und insbesondere durch den bevorzugten vollständigen oder zumindest teilweisen Austausches des Lösungsmittels (L) gegen ein Lösungsmittel (L1) mit einem geringeren Dipolmoment überraschenderweise auch die im Filtrat in gelöster Form zurückbleibende Salzmenge deutlich reduziert.

Besonders bevorzugt ist eine Variante des erfindungsgemäßen Verfahrens, bei dem einzusetzende Gesamtmenge des Alkohols (A) derart aufgeteilt wird, dass mindestens 3% der gesamten Alkoholmenge bereits vor Reaktionsbeginn in der Reaktionsmischung vorgelegt und vorzugsweise mindestens 30% der gesamten Alkoholmenge erst während der Reaktion zu der Reaktionsmischung hinzudosiert werden.

Vorzugsweise wird die einzusetzende Gesamtmenge des Alkohols (A) derart aufgeteilt, dass mindestens 5% und besonders bevorzugt mindestens 8% der gesamten Alkoholmenge bereits vor Reaktionsbeginn in der Reaktionsmischung vorgelegt und mindestens 50% und besonders bevorzugt mindestens 70% der gesamten Alkoholmenge erst während der Reaktion zudosiert werden.

So wurde überraschenderweise gefunden, dass das erfindungsgemäße Verfahren, bei der Teile des Alkohols (A) vorgelegt und nur der Rest während der Reaktion zudosiert wird, deutlich bessere Ergebnisse liefert, als die Herstellvarianten entsprechend des Standes der Technik, bei der die gesamte Alkoholmenge entweder komplett vorgelegt oder aber komplett in Form einer Mischung mit dem Silan (S1) zudosiert wird.

Dabei ist bereits in DE 10240388 beschrieben, dass eine Dosierung des Alkohols (A) erst während der Reaktion durch die damit verbundene Erhöhung der Siedetemperatur der Reaktionsmischung zu einer schnelleren Reaktion und damit zu besseren Raum-Zeit-Ausbeuten führt. Überraschend ist jedoch, dass die erfindungsgemäß bevorzugte Verfahrensvariante, bei der Teile des Alkohols (A) vorgelegt und nur der Rest während der Reaktion zudosiert wird, im Vergleich zu der in DE 10240388 beschriebenen vollständigen Dosierung des Alkohols (A) zu deutlich besseren Ausbeuten und einer deutlich reduzierten Bildung von oligomeren und/oder polymeren Verunreinigungen führt.

Bei einer bevorzugten Variante des erfindungsgemäßen Verfahrens wird die Dosiergeschwindigkeit des Alkohols (A) über die Siedetemperatur der Reaktionsmischung gesteuert. Vorzugsweise wird der Alkohol so schnell dosiert, dass die Reaktionsmischung während der gesamten Reaktionsdauer einen Siedepunkt >110 °C, bevorzugt >120°C und besonders bevorzugt >125°C aufweist. Die Obergrenze des Siedepunktes liegt vorzugsweise bei 150 °C und besonders bevorzugt bei 145 °C.

Vorteilhaft ist ein Verfahren, bei dem die zuzudosierenden Anteile von Halogenorganosilan (S1) und Alkohol (A) vorgemischt werden, und diese Mischung während der Reaktion zudosiert wird.

Sofern eine Mischung aus Silan (S1) und Alkohol (A) dosiert wird, wird die Dosiergeschwindigkeit dieser Mischung vorzugsweise über die Siedetemperatur der Reaktionsmischung gesteuert. Dabei gelten bevorzugt die oben genannten bevorzugten Grenzen für die maximalen und minimalen Siedetemperaturen.

Ein besonderer Vorteil einer Dosierung einer geeigneten Mischung aus Silan (S1) und Alkohol (A) liegt in der Tatsache, dass eine zu schnelle Dosierung dieser Mischung auf Grund des in der Reaktionsmischung steigenden Anteils an niedrigsiedendem Alkohol (A) zu einer Absenkung des Siedepunktes führt. Ein konstanter Siedepunkt hingegen zeigt einen weitgehend konstanten Alkoholgehalt in der Reaktionsmischung an. Daher wird ein Verfahren bevorzugt, bei dem eine Mischung aus Silan (S1) und Alkohol (A) dosiert wird, die einen Alkoholgehalt aufweist, der eine mit einer zu schnellen Dosierung einhergehende Akkumulation nicht abreagierten Silans (S1) in der Reaktionsmischung durch eine gleichzeitige Akkumulation von nicht abreagiertem Alkohol (A) und einem auf diese Weise fallenden Siedepunkt der Reaktionsmischung anzeigt. Dies erlaubt eine schnellstmögliche Reaktionsführung in einem optimalen Temperaturfenster, ohne dass es auf Grund einer gegebenenfalls zu schnellen Eduktdosierung zu einer möglicherweise gefährlichen Akkumulation von Edukten in der Reaktionsmischung kommen kann. Auf diese Weise lassen sich optimale Raum-Zeit-Ausbeuten erzielen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1

### Erfindungsgemäßes Verfahren zur Herstellung von N-(3-Tri-methoxysilylpropyl)-O-methylcarbamat

In einem 500 ml-Vierhalskolben mit Rückflusskühler, KPG-Rührer, Thermometer wird eine Suspension aus 74,46 g Kaliumcyanat, 0,73 g Kaliumjodid in 117,08 g Dimethylformamid und 3,5 g Methanol auf 140 °C erwärmt. Dann wird innerhalb von 2,5 h eine Lösung aus 173,7 g 3-Chlorpropyltrimethoxysilan und 25,6 g Methanol unter Rückfluss dosiert. Die Siedetemperatur der Reaktionsmischung bleibt dabei stabil in einem Temperaturbereich von 130 bis 140 °C. Nach Zugabeende wird noch für 2 h nachgerührt, wobei die Siedetemperatur mit anfangs noch leicht ansteigender Tendenz in demselben Temperaturbereich bleibt. Danach ist das Edukt 3-Chlorpropyltrimethoxysilan gaschromatographisch nur noch in Spuren <0,1% bezogen auf die gebildete Produktmenge nachweisbar.

Danach wird auf ca. 50 °C abgekühlt und bei einem Druck von ca. 11 mbar werden insgesamt 106,1 g Dimethylformamid abdestilliert. Die Sumpftemperatur steigt dabei von anfangs 51 °C bis auf 100 °C wohingegen die Kopftemperatur in einem Bereich von 53-56 °C weitgehend konstant bleibt. Das abdestillierte Dimethylformamid weist eine Reinheit >95% auf und kann in einem Folgeansatz problemlos wiederverwendet werden.

Anschließend wird auf ca. 30 °C abgekühlt. Dann werden 100 ml Toluol hinzugegeben und für 30 min bei Raumtemperatur gerührt. Danach werden sämtlichen Feststoffe über eine Drucknutsche mit einem Seitz K900-Filter bei einem Überdruck von 0,2 bar abfiltriert. Die Filtration ist dabei problemlos möglich und innerhalb von ca. 10 Minuten abgeschlossen. Der Filterkuchen wird mit 70 ml Toluol nachgewachsen, was ebenfalls innerhalb von 5-10 Minuten vollständig abgeschlossen ist. Die Filtrate werden vereinigt.

Im letzten Schritt wird schließlich das Toluol bei einem Druck von ca. 30 mbar und einer Sumpftemperatur von 30 bis 70 °C destillativ entfernt. Dabei werden ca. 95 % der eingesetzten Toluolmenge in einer Reinheit >95% zurückgewonnen. Das zurückgewonnene Toluol kann in einem Folgeansatz problemlos wiederverwendet werden.

Zum Ende der Destillation wird der Druck auf 1 mbar gesenkt und die Sumpftemperatur für 10 min auf 130 °C gesteigert. Die dabei erhaltene Destillatmenge von ca. 17 ml enthält im Wesentlichen die bis dato in der Reaktionsmischung verbliebenen Dimethylformamid- und Toluolmengen und wird verworfen.

Das als Destillationssumpf verbleibende Rohprodukt wird mittels ¹H-NMR analysiert. Die Produktreinheit kann dabei beispielsweise durch Integration des

CH₃O-CO-NH-CH₂-CH₂-CH₂-Si(OCH₃)₃-Signals und Vergleich dieses Integralwertes mit den Signal-Integralen eines zugesetzten internen Standards wie Benzoltricarbonsäuretrimethylester bestimmt werden. Das nach diesem Verfahren analysierte Rohprodukt weist eine Reinheit von ca. 85% auf. Das Rohprodukt ist klar. Auch bei einer mehrtägigen Lagerung bei 0°C fällt kein Feststoff mehr aus.

### Beispiel 2

### Erfindungsgemäßes Verfahren zur Herstellung von N-(3-Tri-methoxysilylpropyl)-O-methylcarbamat

Es wird ebenso vorgegangen wie in Beispiel 1, nur dass nach der destillativen Entfernung vom Dimethylformamid der Reaktionsmischung anstelle der 100 ml Toluol eine identische Menge Xylol zugesetzt werden. Auch wird der Filterkuchen nicht mit Toluol sondern mit 70 ml Xylol nachgewaschen. Die Filtration und das Nachwaschen des Filterkuchens verlaufen ebenso unproblematisch wie bei Beispiel 1 beschrieben.

Im letzten Schritt wird das Xylol aus den vereinigten Filtraten bei einem Druck von 15-20 mbar und einer Sumpftemperatur von 40 bis 80 °C destillativ entfernt. Dabei werden ca. 93 % der eingesetzten Xylolmenge in einer Reinheit >95% zurückgewonnen. Das zurückgewonnene Xylol kann in einem Folgeansatz problemlos wiederverwendet werden.

Zum Ende der Destillation wird der Druck auf 1 mbar gesenkt und die Sumpftemperatur für 10 min auf 130 °C gesteigert. Das dabei erhaltene Destillat enthält im Wesentlichen die bis dato in der Reaktionsmischung verbliebenen Dimethylformamid- und Xylolmengen und wird verworfen.

Das erhaltene Rohprodukt weist entsprechend der bei Beispiel 1 beschriebenen ¹H-NMR-Analytik eine Reinheit von ca. 84% auf. Auch bei einer mehrtägigen Lagerung bei 0°C fällt kein Feststoff mehr aus.

### Beispiel 3

### Erfindungsgemäßes Verfahren zur Herstellung von N-(3-Tri-methoxysilylpropyl)-O-methylcarbamat

Es wird ebenso vorgegangen wie in Beispiel 1, nur dass nach der destillativen Entfernung vom Dimethylformamid der Reaktionsmischung anstelle der 100 ml Toluol eine identische Menge *n*-Heptan zugesetzt werden. Auch wird der Filterkuchen nicht mit Toluol sondern mit 70 ml *n*-Heptan nachgewaschen. Die Filtration und das Nachwaschen des Filterkuchens benötigen mit jeweils ca. 15 Minuten geringfügig mehr Zeit als beim in Beispiel 1 beschriebenen Einsatz von Toluol. Trotzdem ist dieser Prozessschritt insgesamt weiterhin problemlos durchführbar.

Im letzten Schritt wird das Heptan aus den vereinigten Filtraten bei einem Druck von 30 mbar und einer Sumpftemperatur von 40 bis 60 °C destillativ entfernt. Dabei werden ca. 95 % der eingesetzten Heptanmenge in einer Reinheit >95% zurückgewonnen. Das zurückgewonnene Heptan kann in einem Folgeansatz problemlos wiederverwendet werden.

Zum Ende der Destillation wird der Druck auf 1 mbar gesenkt und die Sumpftemperatur für 10 min auf 130 °C gesteigert. Das dabei erhaltene Destillat enthält im Wesentlichen die bis dato in der Reaktionsmischung verbliebenen Dimethylformamid- und Heptanmengen und wird verworfen.

Das erhaltene Rohprodukt weist entsprechend der bei Beispiel 1 beschriebenen ¹H-NMR-Analytik eine Reinheit von ca. 84% auf. Auch bei einer mehrtägigen Lagerung bei 0°C fällt kein Feststoff mehr aus.

### Vergleichsbeispiel 1

### Nicht erfindungsgemäßes Verfahren zur Herstellung von N-(3-Tri-methoxysilylpropyl)-O-methylcarbamat

Die Reaktion wird ebenso durchgeführt wie in Beispiel 1. Beim Reaktionsende hingegen wird das Dimethylformamid nicht entfernt sondern die Reaktionsmischung nach dem Abkühlen direkt filtriert.

Die Mischung ist jedoch praktisch kaum filtrierbar. Bei der Durchführung der Filtration entsprechend der in Beispiel 1 beschriebenen Vorgehensweise wird für eine vollständige Filtration jedoch ca. 2,5 h benötigt. Der Waschvorgang des Filterkuchens mit 70 g Dimethylformamid dauert weitere 1,5-2 h.

Anschließend wird das Dimethylformamid bei einem Druck von ca. 11 mbar abdestilliert. Die Sumpftemperatur steigt dabei von anfangs 51 °C bis auf 100 °C wohingegen die Kopftemperatur in einem Bereich von 53-56 °C weitgehend konstant bleibt. Zum Ende der Destillation wird der Druck auf 1 mbar gesenkt und die Sumpftemperatur für 10 min auf 130 °C gesteigert.

Während der Destillation fällt im Destillationssumpf jedoch erneut ein Feststoff aus. Nach dem Abkühlen auf Raumtemperatur muss daher erneut filtriert werden.

Das erhaltene Rohprodukt weist entsprechend der bei Beispiel 1 beschriebenen ¹H-NMR-Analytik eine Reinheit von ca. 83% auf. Es bleibt bei Raumtemperatur klar. Bei einer 1-tägigen Lagerung bei 0 °C fällt jedoch erneut ein Feststoff aus.

### Beispiel 4

### Erfindungsgemäßes Verfahren zur Herstellung von N-(3-Tri-methoxysilylpropyl)-O-methylcarbamat

Dieses Beispiel beschreibt eine nicht bevorzugte Verfahrensweise, bei der das Lösungsmittel (L) zwar entfernt, nicht aber durch ein Lösungsmittel (L1) mit geringerem Dipolmoment ersetzt wird. Die Durchführbarkeit des Verfahrens ist weniger vorteilhaft als bei der bevorzugten Vorgehensweise der Beispiele 1-3 aber immer noch deutlich besser als bei der nicht erfindungsgemäßen Vorgehensweise des Vergleichsbeispiels:
Die Reaktion wird ebenso durchgeführt wie in Beispiel 1. Ebenso wird das DMF wie in Beispiel 1 destillativ entfernt. Jedoch wird vor der Filtration kein Toluol zugegeben

Die Filtration wird entsprechend der in Beispiel 1 beschriebenen Vorgehensweise durchgeführt wobei der Filterkuchen zweimal mit 70 ml Toluol nachgewaschen wird. Der Filtrations- und Waschvorgang ist dabei mit einer Gesamtdauer von ca. 1,5 Stunden zwar praktikabel aber bei weitem nicht mehr so unproblematisch wie bei der in den Beispielen 1-3 beschriebenen bevorzugten Vorgehensweise.

Im letzten Schritt wird schließlich das Toluol bei einem Druck von ca. 30 mbar und einer Sumpftemperatur von 30 bis 70 °C destillativ entfernt. Dabei werden ca. 95 % der eingesetzten Toluolmenge in einer Reinheit >95% zurückgewonnen. Das zurückgewonnene Toluol kann in einem Folgeansatz problemlos wiederverwendet werden.

Zum Ende der Destillation wird der Druck auf 1 mbar gesenkt und die Sumpftemperatur für 10 min auf 130 °C gesteigert. Das dabei erhaltene Destillat enthält im Wesentlichen die bis dato in der Reaktionsmischung verbliebenen Dimethylformamid- und Toluolmengen und wird verworfen.

Während der Destillation fällt im Destillationssumpf jedoch erneut ein Feststoff aus. Nach dem Abkühlen auf Raumtemperatur muss daher erneut filtriert werden.

Das erhaltene Rohprodukt weist entsprechend der bei Beispiel 1 beschriebenen ¹H-NMR-Analytik eine Reinheit von ca. 84% auf. Auch bei einer mehrtägigen Lagerung bei 0°C fällt kein Feststoff mehr aus.

### Beispiel 5

### Erfindungsgemäßes Verfahren zur Herstellung von N-(3-Tri-methoxysilylpropyl)-O-methylcarbamat:

Dieses Beispiel beschreibt eine nicht bevorzugte Verfahrensweise, bei der die gesamte Menge des Alkohols (A) erst während der Reaktion zugegeben wird. Die Durchführbarkeit des Verfahrens ist ebenso vorteilhaft wie bei der bevorzugten Vorgehensweise der Beispiele 1-3. Allerdings wird ein Rohprodukt mit einer etwas geringeren Produktreinheit erhalten:
Es wird ebenso vorgegangen wie in Beispiel 1, nur dass die gesamte einzusetzende Methanolmenge von 29,1 g in Form einer Mischung mit 173,7 g 3-Chlorpropyltrimethoxysilan erst während der Reaktion zudosiert wird.

Das erhaltene Rohprodukt weist entsprechend der bei Beispiel 1 beschriebenen ¹H-NMR-Analytik eine Reinheit von ca. 73% auf. Auch bei einer mehrtägigen Lagerung bei 0°C fällt kein Feststoff mehr aus.

### Beispiel 6

### Erfindungsgemäßes Verfahren zur Herstellung von N-(Methyldi-methoxysilylmethyl)-O-methylcarbamat

Es wird ebenso vorgegangen wie in Beispiel 1, nur dass nicht eine Lösung aus 135,2 g 3-Chlorpropyltrimethoxysilan und 25,6 g Methanol sondern statt dessen eine Lösung aus 173,7 g Chlormethyl-methyldimethoxysilan und 25,6 g Methanol zum Reaktionsansatz hinzudosiert wird.

Das erhaltene Rohprodukt wird ähnlich der in Beispiel 1 beschriebenen Vorgehensweise mittels ¹H-NMR-Analytik untersucht, wobei jedoch das Integral des CH₃O-CO-NH-CH₂-Si(CH₃)(OCH₃)₂-Signals für die Bestimmung der Produktreinheit benutzt wird. Es ergibt sich eine Reinheit von ca. 79%.

Auch bei einer mehrtägigen Lagerung des Rohproduktes bei 0°C fällt kein Feststoff mehr aus.

## Patentansprüche

1. Verfahren zur Herstellung von Carbamatoorganosilanen (S) der allgemeinen Formel (7), 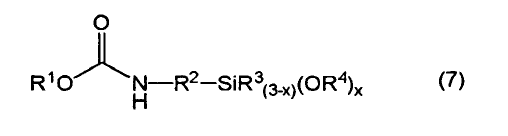 bei dem ein Halogenorganosilan (S1) der allgemeinen Formel (8),
X-R²-SiR³₍₃₋ₓ₎(OR⁴)ₓ (8)
mit einem Metallcyanat (MOCN) und einem Alkohol (A) der allgemeinen Formel (9),
R¹OH (9)
in Gegenwart mindestens eines aprotischen Lösungsmittel (L) umgesetzt wird, wobei
**R¹**, **R³** und **R⁴** jeweils einen unsubstituierten oder halogensubstituierten Kohlenwasserstoffrest mit 1-10 C-Atomen,
**R²** einen zweiwertigen unsubstituierten oder halogensubstituierten Kohlenwasserstoffrest mit 1-10 C-Atomen, der durch nicht benachbarte Sauerstoffatome unterbrochen sein kann,
**X** ein Halogenatom, und
**x** einen Wert 0, 1, 2 oder 3 bedeuten,
wobei vor der Feststoffabtrennung der als Nebenprodukte entstandenen Metallhalogenide sowie der gegebenenfalls noch vorhanden Metallcyanatreste mindestens 50% des Lösungsmittels (L) destillativ entfernt werden.

2. Verfahren nach Anspruch 1, bei dem der Reaktionsmischung vor der Feststoffabtrennung mindestens ein Lösungsmittel (L1) zugegeben wird, welches ein geringeres Dipolmoment aufweist als das Lösungsmittel (L).

3. Verfahren nach Anspruch 1 oder 2, bei dem die Reaktionstemperatur bei 110 °C bis 200 °C liegt.

4. Verfahren nach Anspruch 1 bis 3, bei dem **R³** ausgewählt wird aus Methyl-, Ethyl-, iso- und n-Propyl-Rest.

5. Verfahren nach Anspruch 1 bis 4, bei dem **R⁴** ausgewählt wird aus Methyl-, Ethyl-, iso- und n-Propyl-Rest.

6. Verfahren nach Anspruch 1 bis 5, bei dem **R²** ein Propylen-oder Methylenrest ist.

7. Verfahren nach Anspruch 1 bis 6, bei dem **R¹** ausgewählt wird aus Methyl-, Ethyl-, iso- und n-Propyl-Rest.

8. Verfahren nach Anspruch 1 bis 7, bei dem X ein Chloratom bedeutet.

9. Verfahren nach Anspruch 1 bis 8, bei dem das Lösungsmittel (L) ausgewählt wird aus Dimethylformamid, Dimethylsulfoxid, *N*-Methylpryrrolidon, *N*-Methylimidazol, Sulfolan, Diethylformamid, Dimethylacetamid, Diethylacetamid, Acetylaceton, Acetessigester, Hexamethylphosphorsäuretriamid, Acetonitril, Butyronitril, sowie Ethern und Estern mit mindestens zwei Ether- oder Estergruppen pro Molekül.

10. Verfahren nach Anspruch 2 bis 9, bei dem das Lösungsmittel (L1) ausgewählt wird aus aromatischen und aliphatischen Kohlenwasserstoffen, substituierten Aromaten, heterocyclischen Aromaten, Ethern, Estern und Ketonen.

11. Verfahren nach Anspruch 1 bis 10, bei dem die einzusetzende Gesamtmenge des Alkohols (A) der allgemeinen Formel (9) derart aufgeteilt wird, dass mindestens 3% der gesamten Alkoholmenge bereits vor Reaktionsbeginn in der Reaktionsmischung vorgelegt und mindestens 30% der gesamten Alkoholmenge erst während der Reaktion zu der Reaktionsmischung hinzudosiert werden.

## Claims

1. Process for preparing carbamatoorganosilanes (S) of the general formula (7) 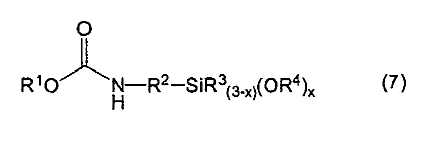 in which a haloorganosilane (S1) of the general formula (8)
X-R²-SiR³₍₃₋ₓ₎(OR⁴)ₓ (8)
is reacted with a metal cyanate (MOCN) and an alcohol (A) of the general formula (9)
R¹OH (9)
in the presence of at least one aprotic solvent (L), where
**R¹, R³** and **R⁴** are each an unsubstituted or halogen-substituted hydrocarbyl radical having 1-10 carbon atoms,
**R²** is a divalent unsubstituted or halogen-substituted hydrocarbyl radical which has 1-10 carbon atoms and may be interrupted by nonadjacent oxygen atoms,
**X** is a halogen atom, and
**x** is a value of 0, 1, 2 or 3,
wherein the removal of the solid metal halides formed as by-products and of any solid metal cyanate residues still present is preceded by distillative removal of at least 50% of the solvent (L).

2. Process according to Claim 1, in which at least one solvent (L1) having a lower dipole moment than the solvent (L) is added to the reaction mixture before the removal of solids.

3. Process according to Claim 1 or 2, in which the reaction temperature is 110°C to 200°C.

4. Process according to Claims 1 to 3, in which **R³** is selected from methyl, ethyl, isopropyl and n-propyl radical.

5. Process according to Claims 1 to 4, in which **R⁴** is selected from methyl, ethyl, isopropyl and n-propyl radical.

6. Process according to Claims 1 to 5, in which **R²** is a propylene or methylene radical.

7. Process according to Claims 1 to 6, in which **R¹** is selected from methyl, ethyl, isopropyl and n-propyl radical.

8. Process according to Claims 1 to 7, in which **X** is a chlorine atom.

9. Process according to Claims 1 to 8, in which the solvent (L) is selected from dimethylformamide, dimethyl sulfoxide, *N*-methylpyrrolidone, *N-*methylimidazole, sulfolane, diethylformamide, dimethylacetamide, diethylacetamide, acetylacetone, ethyl acetoacetate, hexamethylphosphoramide, acetonitrile, butyronitrile, and ethers and esters with at least two ether or ester groups per molecule.

10. Process according to Claims 2 to 9, in which the solvent (L1) is selected from aromatic and aliphatic hydrocarbons, substituted aromatics, heterocyclic aromatics, ethers, esters and ketones.

11. Process according to Claims 1 to 10, in which the total amount of the alcohol (A) of the general formula (9) to be used is divided in such a way that at least 3% of the total amount of alcohol is initially charged in the reaction mixture before the reaction commences and at least 30% of the total amount of alcohol is not metered into the reaction mixture until during the reaction.

## Revendications

1. Procédé pour la préparation de carbamatoorganosilanes (S) de formule générale (7) 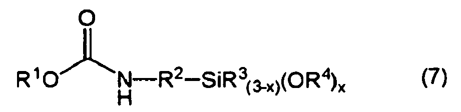 dans lequel on transforme un halogénoorganosilane (S1) de formule générale (8)
X-R²-SiR³₍₃₋ₓ₎(OR⁴)ₓ (8)
avec un métallocyanate (MOCN) et un alcool (A) de formule générale (9),
R¹OH (9)
en présence d'au moins un solvant aprotique (L),
R¹, R³ et R⁴ signifiant à chaque fois un radical hydrocarboné non substitué ou halogénosubstitué comprenant 1-10 atomes de carbone,
R² signifiant un radical hydrocarboné divalent, non substitué ou halogénosubstitué comprenant 1-10 atomes de carbone, qui peut être interrompu par des atomes d'oxygène non adjacents,
X signifiant un atome d'halogène et
x valant 0, 1, 2 ou 3,
au moins 50% du solvant (L) étant éliminés par distillation avant la séparation sous forme solide des halogénures de métal formés en tant que produits secondaires ainsi que des restes de métallocyanate le cas échéant encore présents.

2. Procédé selon la revendication 1, dans lequel le mélange réactionnel est additionné, avant la séparation des solides, d'au moins un solvant (L1), qui présente un moment dipolaire inférieur à celui du solvant (L).

3. Procédé selon la revendication 1 ou 2, dans lequel la température de réaction se situe entre 110°C et 200°C.

4. Procédé selon les revendications 1 à 3, dans lequel R³ est choisi parmi le radical méthyle, éthyle, iso-propyle et n-propyle.

5. Procédé selon les revendications 1 à 4, dans lequel R⁴ est choisi parmi le radical méthyle, éthyle, iso-propyle et n-propyle.

6. Procédé selon les revendications 1 à 5, dans lequel R² est un radical propylène ou méthylène.

7. Procédé selon les revendications 1 à 6, dans lequel R¹ est choisi parmi le radical méthyle, éthyle, iso-propyle et n-propyle.

8. Procédé selon les revendications 1 à 7, dans lequel X signifie un atome de chlore.

9. Procédé selon les revendications 1 à 8, dans lequel le solvant (L) est choisi parmi le diméthylformamide, le diméthylsulfoxyde, la N-méthylpyrrolidone, le N-méthylimidazole, le sulfolane, le diéthylformamide, le diméthylacétamide, le diéthylacétamide, l'acétylacétone, l'ester acétoacétique, le triamide de l'acide hexaméthylphosphorique, l'acétonitrile, le butyronitrile, ainsi que les éthers et les esters présentant au moins deux groupes éther ou ester par molécule.

10. Procédé selon les revendications 2 à 9, dans lequel le solvant (L1) est choisi parmi les hydrocarbures aromatiques et aliphatiques, les aromatiques substitués, les aromatiques hétérocycliques, les éthers, les esters et les cétones.

11. Procédé selon les revendications 1 à 10, dans lequel la quantité totale à utiliser d'alcool (A) de formule générale (9) est répartie de manière telle qu'au moins 3% de la quantité totale d'alcool sont déjà disposés au préalable avant le début de la réaction dans le mélange réactionnel et au moins 30% de la quantité totale d'alcool ne sont dosés que pendant la réaction dans le mélange réactionnel.
